# EUROPEAN PATENT APPLICATION

(11) **EP 3 211 635 A1**
(43) Date of publication of application: **30.08.2017**
(21) Application number: 17151324.5
(22) Date of filing: 13.01.2017
(51) Int. Cl.: G09G 5/00, H04N 7/22

(54) **DISPLAY-PORT OPTICAL CONNECTOR**

(30) Priority: 24.02.2016 KR 20160022018
(71) Applicant: Opticis Co., Ltd., Gyeonggi-do 13558 (KR)
(72) Inventor: HA, Doo Soo, Seongnam-si, Gyeonggi-do 13612 (KR); KO, Jae Chul, Gwangju-si, Gyeonggi-do 12772 (KR); YANG, Dong Pyeong, Seongnam-si, Gyeonggi-do 13579 (KR); TAK, Yoo Sung, Yongin-si, Gyeonggi-do 16866 (KR)
(74) Representative: Lavoix

(57) **Abstract**

A Display-Port optical connector including a host-side auxiliary interface and a display-side auxiliary interface is provided. The host-side auxiliary interface stores extended display identification data (EDID) and display port configuration data (DPCD) of the display device via communication with an external device, and, when the host-side auxiliary interface is connected to the auxiliary signal terminals of the host device, the host-side auxiliary interface instead of the display device provides the EDID and the DPCD to the host device. When the display-side auxiliary interface is connected to the auxiliary signal terminals of the display device, the display-side auxiliary interface instead of the host device reads the EDID and the DPCD from the display device and stores the read-out EDID and DPCD, and controls an operation of the display-side main interface while performing DPCD communication with the display device.

## Description

### CROSS-REFERENCE TO RELATED APPLICATION

This application claims the benefit of Korean Patent Application No. 10-2016-0022018, filed on February 24, 2016, in the Korean Intellectual Property Office, the disclosure of which is incorporated herein in its entirety by reference.

### BACKGROUND

### 1. Field

One or more embodiments relate to Display-Port optical connectors, and more particularly, to a Display-Port optical connector that connects a host device to a display device according to the Display-Port communication standards proposed by the Video Electronics Standards Association (VESA).

### 2. Description of the Related Art

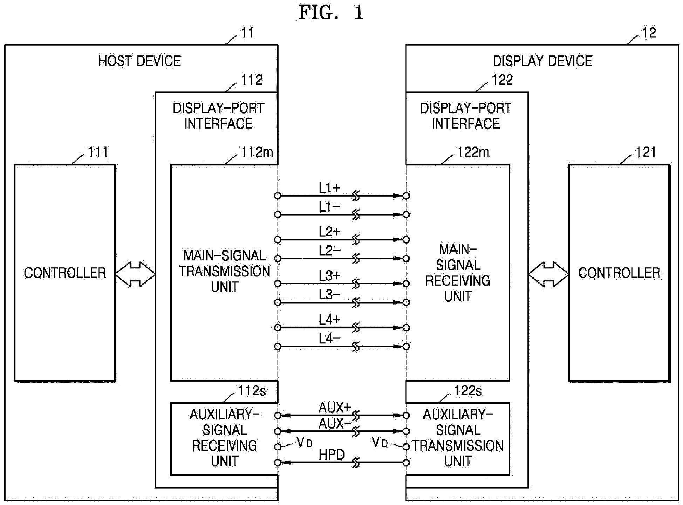

FIG. 1 is a block diagram of a general Display-Port system according to the Display-Port communication standards proposed by the Video Electronics Standards Association (VESA). The general Display-Port system will be described with reference to FIG. 1 below.

In a controller 121 included in a display device 12, extended display identification data (EDID), which is configuration data and control information of the display device 12, and Display-Port configuration data (DPCD), which is reception-condition information of the display device 12, are stored.

A controller 111 included in a host device 11 receives the EDID and the DPCD stored in a serial electrically erasable programmable read-only memory (EEPROM) included in the display device 12 and transmits a main signal to the controller 121 of the display device 12 based on the EDID and the DPCD, according to the Display-Port communication standards. The main signal means image signals including clock signals.

In the transmission of the main signal, the controller 111 of the host device 11 establishes DPCD communication with the controller 121 of the display device 12 according to the Display-Port communication standards of the VESA. The DPCD communication (referred to as communication for link-training) will be summarized below.
First, the controller 111 of the host device 11 transmits planned transmission-condition information of the host device 11 to the controller 121 of the display device 12, based on the received DPCD.
Second, the controller 121 of the display device 12 receives the main signal based on the received transmission-condition information.
Third, when an error occurs during the receiving of the main signal, the controller 121 of the display device 12 transmits a signal indicating that transmission conditions are not appropriate for the controller 121 itself to the controller 111 of the host device 11 by using a connection signal HPD, wherein HPD is hot plug detection. For example, the controller 121 of the display device 12 transmits the connection signal HPD of a pulse string including a plurality of logic values '1' and '0' to the controller 111 of the host device 11. While the display device 12 operates normally, the controller 121 of the display device 12 transmits the connection signal HPD of a logic value '1' to the controller 111 of the host device 11.
Fourth, when the signal indicating that the transmission conditions are not appropriate for the controller 121 is generated using the connection signal HPD, the controller 111 of the host device 11 changes the planned transmission-condition information of the host device 11 and transmits the changed transmission-condition information to the controller 121 of the display device 12.
Fifth, the second to fourth operations are repeatedly performed.

A Display-Port interface 112 included in the host device 11 includes a main-signal transmission unit 112m and an auxiliary-signal receiving unit 112s.

The main-signal transmission unit 112m converts a parallel main signal received from the controller 111 into differential main signals, and transmits the differential main signals as four pairs of differential main signals L1+L1-, L2+L2-, L3+L3-, and L4+L4- that consist of eight lines.

The auxiliary-signal receiving unit 112s receives a pair of differential auxiliary signals AUX+ and AUX- that consist of two lines from the display device 12, converts the pair of differential auxiliary signals AUX+ and AUX- into parallel input signals according to the Display-Port communication standards, and inputs the parallel input signals to the controller 111. For this communication, the auxiliary-signal receiving unit 112s converts parallel output signals received from the controller 111 into differential auxiliary signals according to the Display-Port communication standards, and transmits a pair of differential auxiliary signals AUX+ and AUX- that consist of two lines to the display device 12.

In FIG. 1, reference numeral V_{D} indicates a power supply voltage received from each of the host device 11 and the display device 12, and reference numeral HPD indicates the hot plug detection signal transmitted from display device 12. Since the connection signal HPD indicates a logic '1' state while the display device 12 operates, the controller 111 of the host device 11 may thus determine whether the host device 11 is connected to the display device 12 based on the connection signal HPD.

The controller 121 of the display device 12 transmits the EDID and the DPCD stored according to the Display-Port communication standards to the controller 111 of the host device 11, and receives the main signal from the controller 111 of the host device 11.

A Display-Port interface 122 included in the display device 12 includes a main-signal receiving unit 122m and an auxiliary-signal transmission unit 122s.

The main-signal receiving unit 122m converts four pairs of differential main signals L1+L1-, L2+L2-, L3+L3-, and L4+L4- consisting of eight lines into parallel input signals according to the Display-Port communication standards and inputs the parallel input signals to the controller 121.

The auxiliary-signal transmission unit 122s converts parallel output signals received from the controller 121 into differential auxiliary signals according to the Display-Port communication standards, and transmits a pair of differential auxiliary signals AUX+ and AUX- that consist of two lines to the host device 11. For this communication, the auxiliary-signal transmission unit 122s receives a pair of differential auxiliary signals AUX+ and AUX- that consist of two lines from the host device 11, converts the pair of differential auxiliary signals AUX+ and AUX- into parallel input signals according to the Display-Port communication standards, and inputs the parallel input signals to the controller 121.

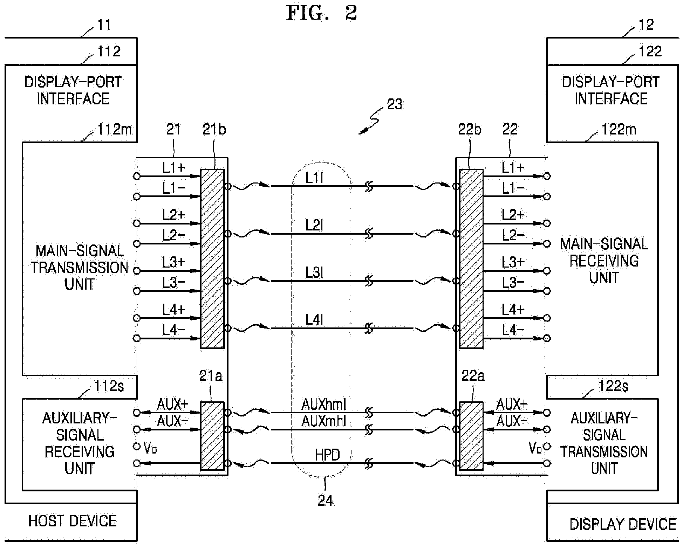

FIG. 2 is a block diagram of a Display-Port system employing a typical Display-Port optical connector 23. In FIG. 2, reference numerals that are the same as those in FIG. 1 denote elements having the same functions.

Referring to FIG. 2, the typical Display-Port optical connector 23 includes a host-side interface 21, a display-side interface 22, and an optical cable 24.

The host-side interface 21 is connected to main signal (L1+ through L4-) terminals and auxiliary signal (AUX+, AUX-, and HPD) terminals of the host device 11.

The display-side interface 22 is connected to main signal (L1+ through L4-) terminals and auxiliary signal (AUX+, AUX-, and HPD) terminals of the display device 12.

The optical cable 24 connects the host-side interface 21 to the display-side interface 22.

The host-side interface 21 includes a host-side main interface 21 b and a host-side auxiliary interface 21 a.

The host-side main interface 21b is connected to the main signal (L1+ through L4-) terminals of the host device 11.

The host-side auxiliary interface 21 a is connected to the auxiliary signal (AUX+, AUX-, and HPD) terminals of the host device 11.

The display-side interface 22 includes a display-side main interface 22b and a display-side auxiliary interface 22a.

The display-side main interface 22b is connected to main signal (L1+ through L4-) terminals of the display device 12.

The display-side auxiliary interface 22a is connected to auxiliary signal (AUX+, AUX-, and HPD) terminals of the display device 12.

Main signals L1+ through L4- to be transmitted from the host-side main interface 21 b to the display-side main interface 22b are transmitted as optical signals.

Auxiliary signals (AUX+, AUX-, and HPD between the host-side auxiliary interface 21 a and the display-side auxiliary interface 22a are transmitted as optical signals.

Such a typical Display-Port optical connector has the following problems.
First, noise may be generated and signal attenuation may occur when the EDID and the DPCD are transmitted as the pair of differential auxiliary signals AUX+ and AUX- to a long distance or when DPCD communication is established.
Second, a typical Display-Port optical connector has only a unique image transmission function and does not have a communication function with users. Thus, when display quality is degraded due to an image transmission problem, this degradation cannot be addressed.

Information disclosed in this Background section was already known to the inventors before achieving the inventive concept or is technical information acquired in the process of achieving the inventive concept. Therefore, it may contain information that does not form the prior art that is already known to the public in this country.

### SUMMARY

One or more embodiments include a Display-Port optical connector capable of preventing noise generation and signal attenuation from occurring when extended display identification data (EDID) and Display-Port configuration data (DPCD) are transmitted or when DPCD communication is established.

One or more embodiments include a Display-Port optical connector capable of addressing degradation of display quality due to an image transmission problem.

Additional aspects will be set forth in part in the description which follows and, in part, will be apparent from the description, or may be learned by practice of the presented embodiments.

According to one or more embodiments, a Display-Port optical connector connects a host device to a display device according to the Display-Port communication standards proposed by the Video Electronics Standards Association (VESA), and includes a host-side interface, a display-side interface, and an optical cable.

The host-side interface may be connected to main signal terminals and auxiliary signal terminals of the host device.

The display-side interface may be connected to main signal terminals and auxiliary signal terminals of the display device.

The optical cable may connect the host-side interface to the display-side interface.

The host-side interface may include a host-side main interface and a host-side auxiliary interface.

The host-side main interface may be connected to the main signal terminals of the host device.

The host-side auxiliary interface may be connected to the auxiliary signal terminals of the host device.

The display-side interface may include a display-side main interface and a display-side auxiliary interface.

The display-side main interface may be connected to the main signal terminals of the display device.

The display-side auxiliary interface may be connected to the auxiliary signal terminals of the display device.

The host-side auxiliary interface may store EDID and DPCD of the display device via communication with an external device, and, when the host-side auxiliary interface is connected to the auxiliary signal terminals of the host device, the host-side auxiliary interface instead of the display device may provide the EDID and the DPCD to the host device.

When the display-side auxiliary interface is connected to the auxiliary signal terminals of the display device, the display-side auxiliary interface instead of the host device may read the EDID and the DPCD from the display device and stores the read-out EDID and DPCD, and may control an operation of the display-side main interface while performing DPCD communication with the display device.

The Display-Port optical connector according to one or more embodiments has the following effects.

First, the host-side auxiliary interface instead of the display device provides the EDID and the DPCD to the host device. The display-side auxiliary interface instead of the host device controls an operation of the display-side main interface while performing the DPCD communication with the display device.

Accordingly, auxiliary connection lines may be removed from the optical cable. Thus, noise generation and signal attenuation when the EDID and the DPCD are transmitted as differential auxiliary signals to a long distance or when long-distance DPCD communication is established may be prevented. In addition, since the auxiliary connection lines are not necessary, the Display-Port optical connector is economical.

Second, the host-side auxiliary interface communicates with an external device. Accordingly, a computer or terminal of a user may communicate with the host-side auxiliary interface. Thus, when display quality is degraded due to an image transmission problem, this degradation may be addressed. For example, a user may adjust transmission conditions of the host device by adjusting a DPCD communication program of the host-side auxiliary interface.

### DESCRIPTION OF THE DRAWINGS

These and/or other aspects will become apparent and more readily appreciated from the following description of the embodiments, taken in conjunction with the accompanying drawings in which:
FIG. 1 is a block diagram of a general Display-Port system;
FIG. 2 is a block diagram of a Display-Port system employing a typical Display-Port optical connector;
FIG. 3 is a block diagram of a Display-Port system employing a Display-Port optical connector according to an embodiment of the present invention;
FIG. 4 is a block diagram of an internal structure of a host-side auxiliary interface included in the Display-Port optical connector of FIG. 3;
FIG. 5 is a block diagram of an internal structure of a display-side auxiliary interface included in the Display-Port optical connector of FIG. 3;
FIG. 6 is a block diagram of an internal structure of a host-side bi-directional converter included in the host-side auxiliary interface of FIG. 4 or a display-side bi-directional converter included in the display-side auxiliary interface of FIG. 5;
FIG. 7 is a waveform diagram illustrating a relationship between serial differential signals and serial input and output signals of FIG. 6;
FIG. 8 is a flowchart of an operation algorithm of a host-side controller included in the host-side auxiliary interface of FIG. 4;
FIG. 9 is a flowchart of an operation algorithm of a display-side controller included in the display-side auxiliary interface of FIG. 5;
FIG. 10 illustrates an example in which the Display-Port optical connector according to an embodiment of the present invention is applied;
FIG. 11 is a block diagram of an internal structure of a host-side main interface included in the Display-Port optical connector of FIG. 3; and
FIG. 12 is a block diagram of an internal structure of a display-side main interface included in the Display-Port optical connector of FIG. 3.

### DETAILED DESCRIPTION OF THE INVENTION

The following description and the attached drawings are provided to understand operation according to embodiments of the present invention, and parts of the present invention that are obvious to one of ordinary skill in the art to which the present invention pertains may be omitted.

The present specification and the attached drawings are not provided for purposes of limitation, and the scope of the inventive concept should be defined by the appended claims. The terms used herein should be understood as meanings and concepts to most appropriately describe the present invention in accordance with the technical idea of the present invention.

Embodiments of the present invention will now be described more fully with reference to the accompanying drawings. Like reference numerals in the specification and drawings denote like elements, and thus their description will be omitted.

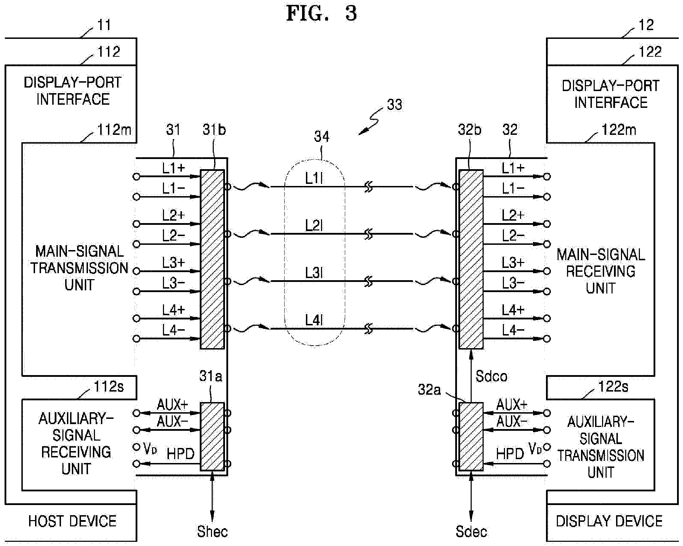

FIG. 3 is a block diagram of a Display-Port system employing a Display-Port optical connector 33 according to an embodiment of the present invention. In FIG. 3, reference numerals that are the same as those in FIG. 1 denote elements having the same functions.

Referring to FIG. 3, the Display-Port optical connector 33 according to the present embodiment includes a host-side interface 31, a display-side interface 32, and an optical cable 34.

The host-side interface 31 is connected to main signal (L1+ through L4-) terminals and auxiliary signal (AUX+, AUX-, and HPD) terminals of the host device 11.

The display-side interface 32 is connected to main signal (L1+ through L4-) terminals and auxiliary signal (AUX+, AUX-, and HPD) terminals of the display device 12.

The optical cable 34 connects the host-side interface 31 to the display-side interface 32.

The host-side interface 31 includes a host-side main interface 31 b and a host-side auxiliary interface 31 a.

The host-side main interface 31b is connected to the main signal (L1+ through L4-) terminals of the host device 11.

The host-side auxiliary interface 31 a is connected to the auxiliary signal (AUX+, AUX-, and HPD) terminals of the host device 11.

The display-side interface 32 includes a display-side main interface 32b and a display-side auxiliary interface 32a.

The display-side main interface 32b is connected to main signal (L1+ through L4-) terminals of the display device 12.

The display-side auxiliary interface 32a is connected to auxiliary signal (AUX+, AUX-, and HPD) terminals of the display device 12.

Main signals L1+ through L4- to be transmitted from the host-side main interface 31 b to the display-side main interface 32b are transmitted as optical signals.

Auxiliary signals AUX+, AUX-, and HPD between the host-side auxiliary interface 31 a and the display-side auxiliary interface 32a are transmitted as optical signals.

In FIG. 3, reference numeral Shec indicates communication signals between the host-side auxiliary interface 31 a and an external device (not shown), for example, communication signals in a universal serial bus (USB) format. The host-side auxiliary interface 31 a stores the extended display identification data (EDID) and Display-Port configuration data (DPCD) of the display device 12 by communicating with the external device. When the host-side auxiliary interface 31 a is connected to the auxiliary signal terminals of the host device 11, the host-side auxiliary interface 31 a instead of the display device 12 provides the EDID and the DPCD to the host device 11.

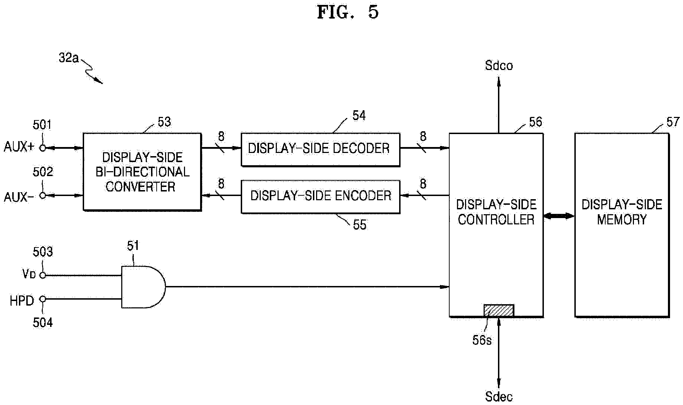

When the display-side auxiliary interface 32a is connected to the auxiliary signal terminals of the display device 12, the display-side auxiliary interface 32a instead of the host device 11 reads the EDID and the DPCD from the display device 12 and stores the read-out EDID and DPCD, and controls an operation of the display-side main interface 32b while establishing DPCD communication with the display device 12. In FIG. 3, reference numeral Sdco indicates control signals that are input from the display-side auxiliary interface 32a to the display-side main interface 32b. In FIG. 3, reference numeral Sdec indicates communication signals between the host-side auxiliary interface 32a and an external device (not shown), for example, communication signals in a USB format. Communication between the host-side auxiliary interface 32a and an external device (not shown) will be described later with reference to FIG. 5.

The Display-Port optical connector 33 according to the present embodiment has the following effects.

First, the host-side auxiliary interface 31 a instead of the display device 12 provides the EDID and the DPCD to the host device 11. In addition, the display-side auxiliary interface 32a instead of the host device 11 controls an operation of the display-side main interface 32b while establishing DPCD communication with the display device 12.

Accordingly, auxiliary connection lines may be removed from the optical cable 34. Thus, noise generation and signal attenuation when the EDID and the DPCD are transmitted as differential auxiliary signals to a long distance or when long-distance DPCD communication is established may be prevented. In addition, since the auxiliary connection lines are not necessary, the Display-Port optical connector 33 according to the present embodiment is economical. In other words, the optical cable 34 connects the host-side main interface 31 b to the display-side main interface 32b.

Second, the host-side auxiliary interface 31 a communicates with an external device. Accordingly, a computer or terminal of a user may communicate with the host-side auxiliary interface 31 a. Thus, when display quality is degraded due to an image transmission problem, this degradation may be addressed. For example, a user may adjust transmission conditions of the host device 11 by adjusting a DPCD communication program of the host-side auxiliary interface 31 a.

According to the present embodiment, the host-side auxiliary interface 31 a includes a host-side serial communication interface for communication with the external device, and stores a program input via the host-side serial communication interface and operates according to the stored program.

The host-side auxiliary interface 31a receives transmission-condition information according to DPCD from the host device 11. When communicating with the external device via the serial communication interface, the host-side auxiliary interface 31 a transmits the transmission-condition information to the external device.

The display-side auxiliary interface 32a includes a display-side serial communication interface for communication with the external device, and stores a program input via the display-side serial communication interface and operates according to the stored program.

The display-side auxiliary interface 32a receives transmission-condition information according to DPCD when communicating with the external device via the display-side serial communication interface, sets to-be-applied transmission conditions according to the received transmission-condition information, and transmits the to-be-applied transmission conditions to the display device 12. In addition, the display-side auxiliary interface 32a controls an operation of the display-side main interface 32b according to the to-be-applied transmission conditions and changes the to-be-applied transmission conditions according to a signal indicating that there is inappropriateness received from the display device 12.

According to the present embodiment, a computer or terminal of a user may communicate with the display-side auxiliary interface 32a. Thus, when display quality is degraded due to an image transmission problem, this degradation may be addressed. For example, a user may adjust transmission conditions of the display-side main interface 32b by adjusting a transmission control program of the display-side auxiliary interface 32a.

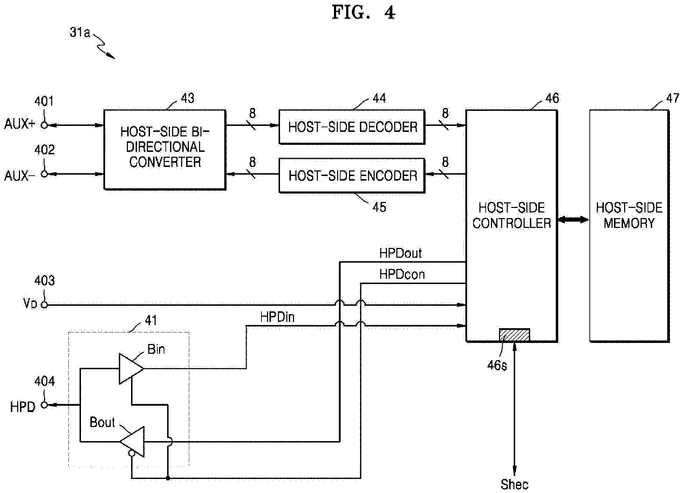

FIG. 4 is a block diagram of an internal structure of the host-side auxiliary interface 31 a of FIG. 3. In FIG. 4, reference numerals that are the same as those in FIG. 3 denote elements having the same functions. The internal structure and operation of the host-side auxiliary interface 31 a will now be described with reference to FIGS. 3 and 4.

The auxiliary signal terminals of the host device 11 include an auxiliary-plus(+) signal terminal 401, an auxiliary-minus(-) signal terminal 402, a power terminal 403, and a connection signal terminal 404.

The host-side auxiliary interface 31 a includes a host-side memory 47, a host-side decoder 44, a host-side encoder 45, a host-side bi-directional converter 43, a host-side controller 46, and a bi-directional switch 41.

The host-side decoder 44 performs decoding according to the well-known Manchester II method.

The host-side encoder 45 performs encoding according to the well-known Manchester II method.

The host-side bi-directional converter 43 converts the serial differential signals AUX+ and AUX- from the auxiliary-plus(+) signal terminal 401 and the auxiliary-minus(-) signal terminal 402 into an 8-bit parallel input signal according to the Display-Port communication standards and inputs the 8-bit parallel input signal to the host-side decoder 44. In addition, the host-side bi-directional converter 43 converts an 8-bit parallel input signal received from the host-side encoder 45 into serial differential signals AUX+ and AUX- according to the Display-Port communication standards and outputs the serial differential signals AUX+ and AUX- to the auxiliary-plus(+) signal terminal 401 and the auxiliary-minus(-) signal terminal 402, respectively.

The host-side controller 46 includes a host-side serial communication interface 46s for communication with an external device. The host-side controller 46 stores the EDID and DPCD of the display device 12 in the host-side memory 47 by communicating with the external device. In addition, the host-side controller 46 outputs the EDID and the DPCD to the host-side encoder 45 while receiving the 8-bit parallel input signal from the host-side decoder 44.

The host-side controller 46 stores a program input via the host-side serial communication interface 46s in the host-side memory 47 and operates according to the stored program. The host-side controller 46 receives transmission-condition information of the host device 11 according to DPCD via the host-side decoder 44. When communicating with the external device via the serial communication interface 46s, the host-side controller 46 transmits the transmission-condition information to the external device.

The bi-directional switch 41 inputs the connection signal HPD received from the connection signal terminal 404 to the host-side controller 46 and outputs a connection signal HPDout received from the host-side controller 46 to the connection signal terminal 404.

FIG. 5 is a block diagram of an internal structure of the display-side auxiliary interface 32a of FIG. 3. In FIG. 5, reference numerals that are the same as those in FIG. 3 denote elements having the same functions. The internal structure and operation of the display-side auxiliary interface 32a will now be described with reference to FIGS. 3 and 5.

The auxiliary signal terminals of the display device 12 include an auxiliary-plus(+) signal terminal 501, an auxiliary-minus(-) signal terminal 502, a power terminal 503, and a connection signal terminal 504.

The display-side auxiliary interface 32a includes a display-side memory 57, a display-side decoder 54, a display-side encoder 55, a display-side bi-directional converter 53, a display-side controller 56, and an AND gate 51.

The display-side decoder 54 performs decoding according to the well-known Manchester II method.

The display-side encoder 55 performs encoding according to the well-known Manchester II method.

The display-side bi-directional converter 53 converts the serial differential signals AUX+ and AUX- received from the auxiliary-plus(+) signal terminal 501 and the auxiliary-minus(-) signal terminal 502 into an 8-bit parallel input signal according to the Display-Port communication standards and inputs the 8-bit parallel input signal to the display-side decoder 55. In addition, the display-side bi-directional converter 53 converts an 8-bit parallel input signal received from the display-side encoder 55 into serial differential signals AUX+ and AUX- according to the Display-Port communication standards and outputs the serial differential signals AUX+ and AUX- to the auxiliary-plus(+) signal terminal 501 and the auxiliary-minus(-) signal terminal 502, respectively.

The display-side controller 56 includes a display-side serial communication interface 56s, and reads the EDID and the DPCD according to 8-bit parallel input signal received from the display-side decoder 54 and stores the read-out EDID and DPCD in the display-side memory 57. In addition, the display-side controller 56 instead of the host device 11 controls an operation of the display-side main interface 32b while establishing DPCD communication with the display device 12.

According to the present embodiment, the display-side controller 56 stores a program input via the display-side serial communication interface 56s in the display-side memory 57 and operates according to the stored program.

The display-side controller 56 receives transmission-condition information according to DPCD when communicating with the external device via the display-side serial communication interface 56s, sets to-be-applied transmission conditions according to the received transmission-condition information, and transmits the to-be-applied transmission conditions to the display-side encoder 55. In addition, the display-side controller 56 controls an operation of the display-side main interface 32b according to the to-be-applied transmission conditions and changes the to-be-applied transmission conditions according to an inappropriateness-indicating signal received from the display-side decoder 54.

The AND gate 51 inputs a signal having a logic value "1" to the display-side controller 56 when the power supply voltage V_{D} from the power terminal 503 and the connection signal HPD from the connection signal terminal 504 are both in a logic "1" state.

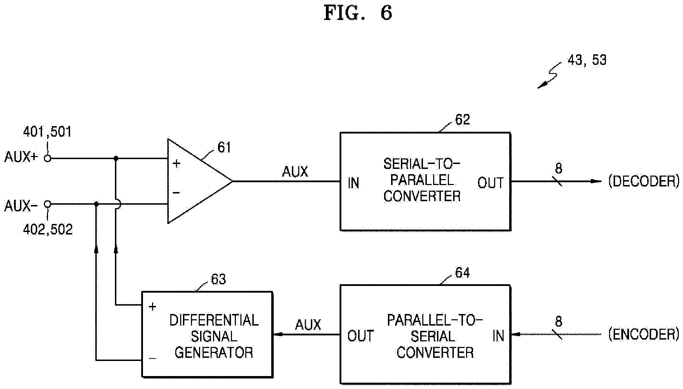

FIG. 6 is a block diagram of an internal structure of the host-side bi-directional converter 43 of FIG. 4 or the display-side bi-directional converter 53 of FIG. 5. The internal structure and operation of the host-side or display side bi-directional converter 43 or 53 will now be described with reference to FIGS. 4-6.

The host-side or display-side bi-directional converter 43 or 53 includes a subtractor 61, a serial-to-parallel converter 62, a parallel-to-serial converter 64, and a differential signal generator 63.

The subtractor 61 generates the serial input signal AUX by subtracting the serial differential signal AUX- received from the auxiliary-minus(-) signal terminal 402 or 502 from the serial differential signal AUX+ received from the auxiliary-plus(+) signal terminal 401 or 501.

The serial-to-parallel converter 62 converts the serial input signal AUX received from the subtractor 61 into an 8-bit parallel input signal according to the Display-Port communication standards and inputs the 8-bit parallel input signal to the host-side or display-side decoder 44 or 54.

The parallel-to-serial converter 64 converts the 8-bit parallel input signal received from the host-side or display-side encoder 45 or 55 into the serial output signal AUX according to the Display-Port communication standards.

The differential signal generator 63 converts the serial output signal AUX received from the parallel-to-serial converter 64 into the serial differential signals AUX+ and AUX- and outputs the serial differential signals AUX+ and AUX- into the auxiliary-plus(+) signal terminal 401 or 501 and the auxiliary-minus(-) signal terminal 402 or 502, respectively.

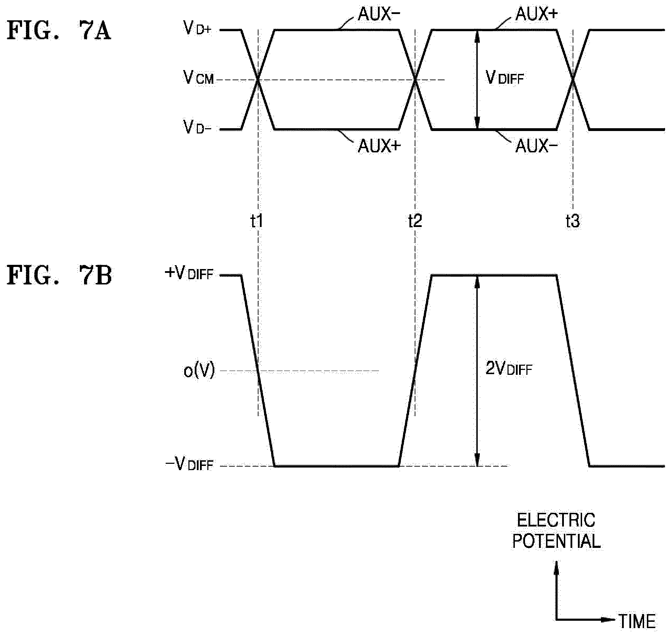

FIG. 7 is a waveform diagram illustrating the relationship between the serial differential signals AUX+ and AUX- and the serial input and output signals AUX of FIG. 6. FIG. 7(a) illustrates the waveforms of the serial differential signals AUX+ and AUX-. FIG. 7(b) illustrates the waveforms of the serial input and output signals AUX.

Referring to FIGS. 6 and 7, the serial differential signals AUX+ and AUX-that are input to or output from the auxiliary-plus(+) signal terminal 401 or 501 and the auxiliary-minus(-) signal terminal 402 or 502 have a low positive potential V_{D-} or a high positive potential V_{D+} based on an intermediate positive potential V_{CM}, and the polarities thereof are reversed. In other words, the difference between electric potentials of the serial differential signals AUX+ and AUX- is a constant potential difference V_{DIFF}.

In the case of the serial input signal AUX input to the serial-to-parallel converter 62 or the serial output signal AUX output by the serial-to-parallel converter 64, the intermediate positive potential V_{CM} between the serial differential signals AUX+ and AUX- is 0 V (volts) which is a ground potential. The low positive potential V_{D-} and the high positive potential V_{D+} of the serial differential signals AUX+ and AUX- correspond to a negative potential and a positive potential, respectively.

In this state, the serial input signal AUX to be input to the serial-to-parallel converter 62 is obtained by subtracting the auxiliary signal AUX- from the auxiliary signal AUX+ among the serial differential signals AUX+ and AUX-. Thus, a pulse height 2V_{DIFF} of the serial input signal AUX is twice the potential difference V_{DIFF} between the serial differential signals AUX+ and AUX-.

For example, a signal having a logic value '0' is obtained between a point of time t1 and a point of time t2, and a signal having a logic value '1' is obtained between the point of time t2 and a point of time t3.

The differential signal generator 63 performs the above-described processes in a reverse order.

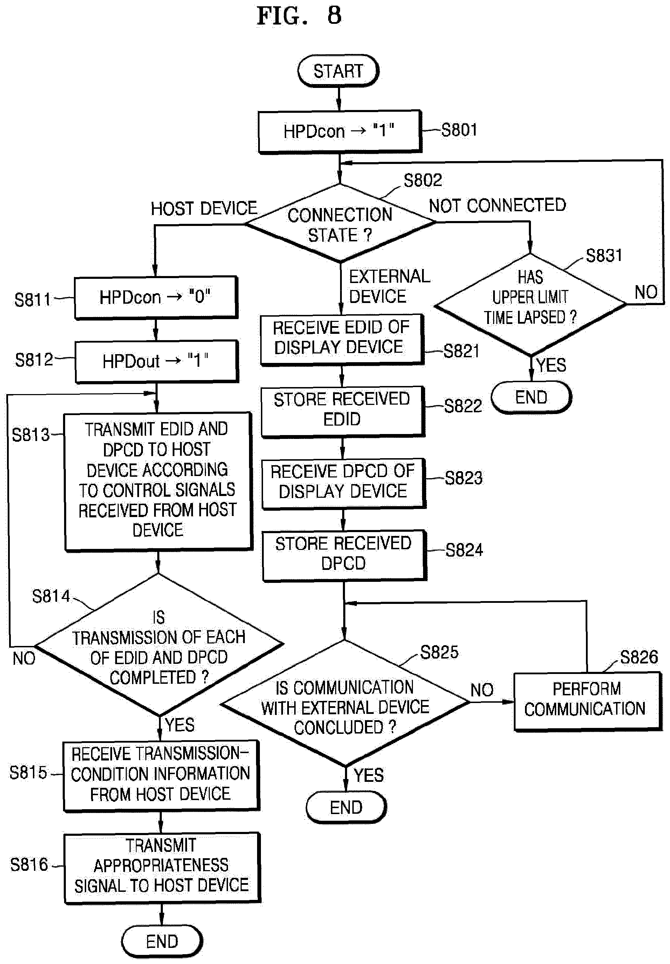

FIG. 8 is a flowchart of an operation algorithm of the host-side controller 46 of FIG. 4. The operation algorithm of FIG. 8 will now be described with reference to FIGS. 3, 4, and 8.

First, the host-side controller 46 initially renders a control signal HPDcon of the bi-directional switch 41 into a state "1" so that the bi-directional switch 41 enters an input state, in operation S801.

In operation S802, the host-side controller 46 determines a connection state with the host device 11 or the external device.

If the host-side controller 46 is not connected to either the host device 11 or the external device until an upper limit time lapses, the host-side controller 46 concludes a control operation, in operation S831.

In operation S802, when the power supply voltage V_{D} from the power terminal 403 is in a logic "1" state and a connection signal HPDin from the bi-directional switch 41 is in a logic "0" state, the host-side controller 46 determines that it has been connected to the host device 11. In this case, the host-side controller 46 changes the control signal HPDcon of the bi-directional switch 41 into a state "0", in operation S811, generates a connection output signal HPDout in a state "1", in operation S812.

Next, the host-side controller 46 transmits EDID and DPCD to the host device 11 according to control signals received from the host device 11, until the transmission of each of the EDID and DPCD is completed, in operations S813 and S814.

Next, the host-side controller 46 receives the transmission-condition information from the host device 11, in operation S815, and then transmits an inappropriateness-indicating signal to the host device 11, in operation S816.

In operation S802, when the host-side controller 46 is connected to the external device via the serial communication interface 46s, the host-side controller 46 operates as follows.

First, the host-side controller 46 receives the EDID of the display device 12, in operation S821.

Next, the host-side controller 46 stores the received EDID in the host-side memory 47, for example, serial electrically erasable and programmable read only memory (EEPROM), in operation S822.

Next, the host-side controller 46 receives the DPCD of the display device 12, in operation S823.

Next, the host-side controller 46 stores the received DPCD in the host-side memory 47, in operation S824.

The host-side controller 46 performs communication until the communication with the external device is concluded, in operations S825 and S826. A computer or terminal of a user as the external device may communicate with the host-side controller 46. Thus, when display quality is degraded due to an image transmission problem, this degradation may be addressed. For example, a user may adjust transmission conditions of the host device 11 by adjusting a DPCD communication program of the host-side controller 46.

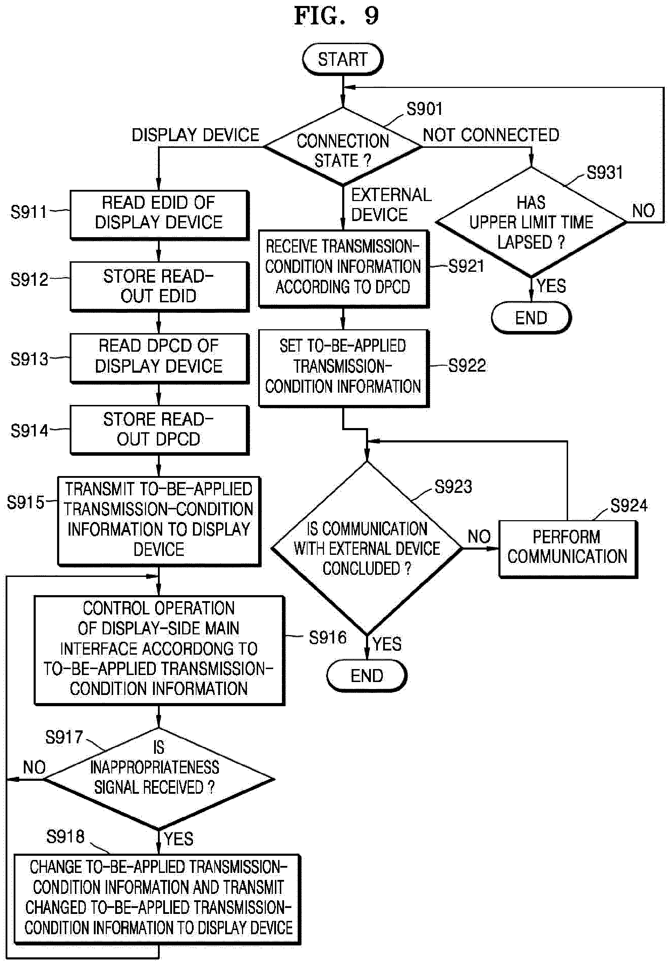

FIG. 9 is a flowchart of an operation algorithm of the display-side controller 56 of FIG. 5. The operation algorithm of FIG. 9 will now be described with reference to FIGS. 3, 5, and 9.

First, in operation S901, the display-side controller 56 determines a connection state with the display device 12 or the external device.

If the display-side controller 56 is not connected to either the display device 12 or the external device until an upper limit time lapses, the display-side controller 56 concludes a control operation, in operation S931.

In operation S901, when an input signal from the AND gate 51 is in a logic "1" state, the display-side controller 56 determines that it has been connected to the display device 12. In this case, the display-side controller 56 performs the following process.

First, the display-side controller 56 reads the EDID of the display device 12, in operation S911.

Next, the display-side controller 56 stores the read EDID in the display-side memory 57, in operation S912.

Next, the display-side controller 56 reads the DPCD of the display device 12, in operation S913.

Next, the display-side controller 56 stores the read DPCD in the display-side memory 57, in operation S914.

The display-side controller 56 performs DPCD communication with the controller 121 of the display device 12, in operations S915 through S918. In other words, the display-side controller 56 performs communication for "link training". The process will now be described in detail.

First, the display-side controller 56 transmits to-be-applied transmission-condition information to the controller 121 of the display device 12 according to the stored DPCD, in operation S915. In addition, the display-side controller 56 controls an operation of the display-side main interface 32b according to the to-be-applied transmission-condition information, in operation S916.

Accordingly, the controller 121 of the display device 12 receives main data based on the received transmission-condition information.

When an error occurs during the receiving of the main data, the controller 121 of the display device 12 generates an inappropriateness signal indicating that transmission conditions are not appropriate for the controller 121 itself, by using the connection signal HPD. For example, the controller 121 of the display device 12 generates a connection signal HPD of a pulse string including a plurality of logic values "1" and "0".

Accordingly, when an inappropriateness signal of a pulse string including a plurality of logic values "1" and "0" is received from the AND gate 51 in operation S917, the display-side controller 56 changes the to-be-applied transmission-condition information and transmits the changed to-be-applied transmission-condition information to the controller 121 of the display device 12, in operation S918.

The DPCD communication operations S916 through S917 are repeatedly performed.

In operation S901, when the display-side controller 56 is connected to the external device via the serial communication interface 56s, the display-side controller 56 operates as follows.

First, the display-side controller 56 receives transmission-condition information according to DPCD from the external device, in operation S921.

Next, the display-side controller 56 sets to-be-applied transmission-condition information according to DPCD, in operation S922.

The display-side controller 56 performs communication until the communication with the external device is concluded, in operations S923 and S924. A computer or terminal of a user as the external device may communicate with the display-side controller 56. Thus, when display quality is degraded due to an image transmission problem, this degradation may be addressed. For example, a user may adjust transmission conditions of the display-side main interface 32b by adjusting a transmission control program of the display-side controller 32a.

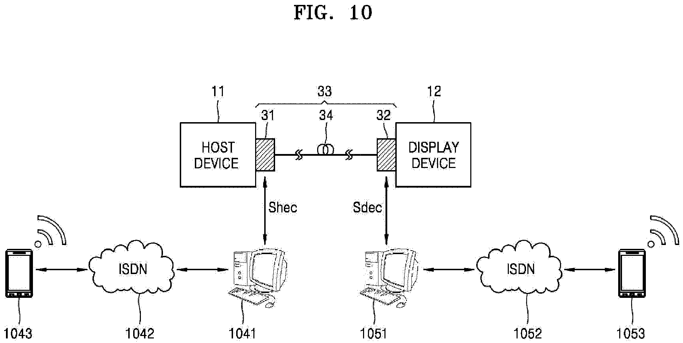

FIG. 10 illustrates an example in which the Display-Port optical connector 33 according to an embodiment of the present invention is applied. In FIG. 10, reference numerals that are the same as those in FIG. 3 denote elements having the same functions. The example of FIG. 10 will now be described with reference to FIGS. 3 and 10.

Referring to FIG. 10, a digital-image transmission apparatus 73 according to an embodiment of the present invention includes the host-side interface 31 connected to the host device 11, the display-side interface 32 connected to the display device 12, and the optical cable 34 connecting the host-side interface 31 to the display-side interface 32.

The host-side auxiliary interface 31 a performs communication with a computer 1041 of a manager to diagnose the operation state of the host-side interface 31, transmit a result of the diagnosis to the computer 1041 of the manager, and control the operation of the host-side interface 31. Furthermore, a communication terminal 1043 of the manager may communicate with the computer 1041 of the manager through an integrated service digital network (ISDN) 1042.

Hence, the manager diagnoses the operation state of the host-side interface 31 and controls the operation of the host-side interface 31 by using his or her computer 1041 or his or her communication terminal 1043.

In addition, the display-side auxiliary interface 32a performs communication with a computer 1051 of a manager to diagnose the operation state of the display-side interface 32, transmit a result of the diagnosis to the computer 1051 of the manager, and control the operation of the display-side interface 32.

Furthermore, a communication terminal 1053 of the manager may communicate with the computer 1051 of the manager through an ISDN 1052.

Hence, the manager diagnoses the operation state of the display-side interface 32 and controls the operation of the display-side interface 32 by using his or her computer 1051 or his or her communication terminal 1053.

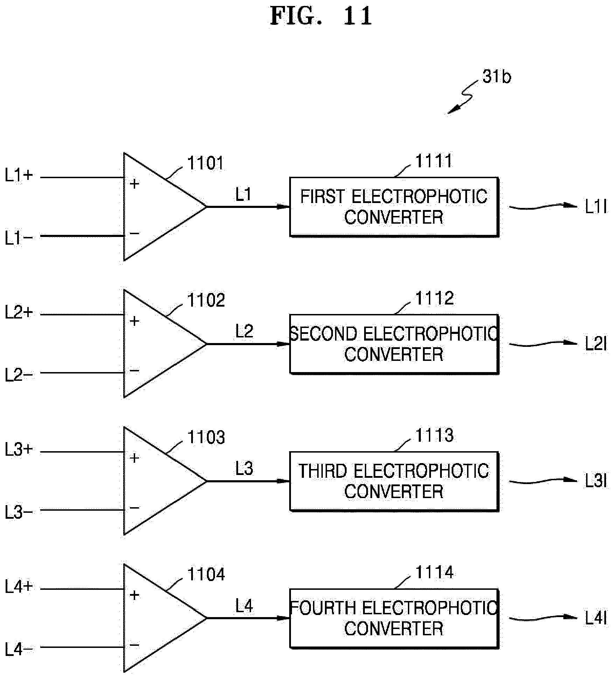

FIG. 11 is a block diagram of an internal structure of the host-side main interface 31 b of the Display-Port optical connector 33 of FIG. 3. The internal structure and operation of the host-side main interface 31 b will now be described with reference to FIGS. 3 and 11.

The host-side main interface 31b includes four subtractors 1101 to 1104 and four electrophotic converters 1111 to 1114.

The four subtractors 1101 to 1104 convert differential main signals L1+ to L4- received from main signal terminals of the host device 11 into single main signals L1 to L4, respectively.

In other words, the subtractors 1101 to 1104 generate the single main signals L1 to L4 by subtracting differential main-minus(-) signals L1-, L2-, L3-, and L4- received from main-minus(-) signal terminals of the host device 11 from differential main-plus(+) signals L1+, L2+, L3+, and L4+ received from main-plus(+) signal terminals of the host device 11, respectively.

The four electrophotic converters 1111 to 1114 convert the single main signals L1 to L4 received from the subtractors 1101 to 1104 into optical signals L1I to L4I, respectively, and transmit the optical signals L1I to L4I to the display-side main interface 32b via optical fiber lines.

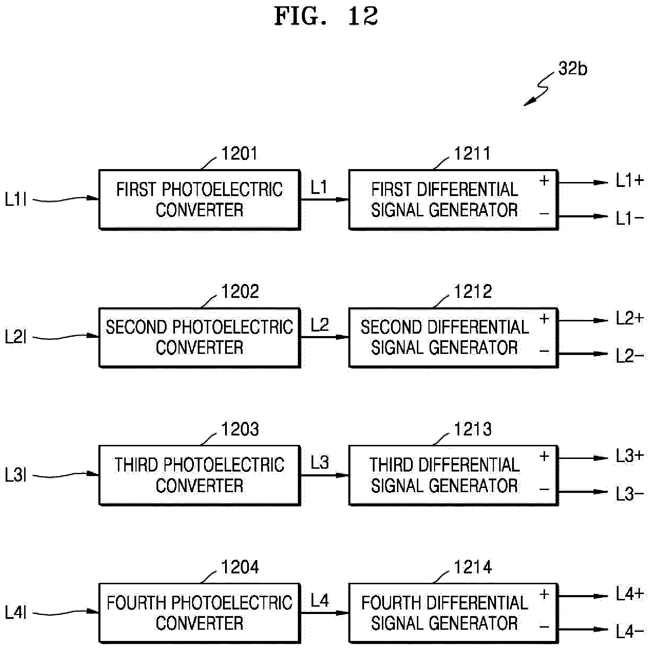

FIG. 12 is a block diagram of an internal structure of the display-side main interface 32b of the Display-Port optical connector 33 of FIG. 3. The internal structure and operation of the display-side main interface 32b will now be described with reference to FIGS. 3 and 12.

The display-side main interface 32b includes four electrophotic converters 1201 to 1204 and four differential signal generators 1211 to 1214.

The photoelectric converters 1201 to 1204 convert optical signals L1I to L4I received from the host-side main interface 31 b via optical fiber lines thereof into main data signals L1 to L4.

The differential signal generators 1211 to 1214 convert the main data signals L1 to L4 respectively received from the photoelectric converters 1201 to 1204 into differential main-data signals L1+ to L4-, respectively.

As described above, an embodiment of the present invention provides the following effects.

First, a host-side auxiliary interface instead of a display device provides EDID and DPCD to a host device. A display-side auxiliary interface instead of the host device controls an operation of a display-side main interface while performing DPCD communication with the display device.

Accordingly, auxiliary connection lines may be removed from an optical cable. Thus, noise generation and signal attenuation when the EDID and the DPCD are transmitted as differential auxiliary signals to a long distance or when long-distance DPCD communication is established may be prevented. In addition, since the auxiliary connection lines are not necessary, a Display-Port optical connector according to an embodiment is economical.

Second, the host-side auxiliary interface communicates with an external device. Accordingly, a computer or terminal of a user may communicate with the host-side auxiliary interface. Thus, when display quality is degraded due to an image transmission problem, this degradation may be addressed. For example, a user may adjust transmission conditions of the host device by adjusting a DPCD communication program of the host-side auxiliary interface.

Additionally, the computer or terminal of the user may communicate with the display-side auxiliary interface. Thus, when display quality is degraded due to an image transmission problem, this degradation may be addressed. For example, the user may adjust transmission conditions of the display-side main interface by adjusting a transmission control program of the display-side auxiliary interface.

While the present invention has been particularly shown and described with reference to exemplary embodiments thereof, it will be understood by those of ordinary skill in the art that various changes in form and details may be made therein without departing from the spirit and scope of the invention as defined by the appended claims.

It should be understood that the exemplary embodiments should be considered in a descriptive sense only and not for purposes of limitation.

## Claims

1. A Display-Port optical connector that connects a host device to a display device according to the Display-Port communication standards proposed by the Video Electronics Standards Association (VESA), the Display-Port optical connector comprising:
a host-side interface connected to main signal terminals and auxiliary signal terminals of the host device;
a display-side interface connected to main signal terminals and auxiliary signal terminals of the display device; and
an optical cable configured to connect the host-side interface to the display-side interface,
wherein the host-side interface comprises:
a host-side main interface connected to the main signal terminals of the host device; and
a host-side auxiliary interface connected to the auxiliary signal terminals of the host device,
the display-side interface comprises:
a display-side main interface connected to the main signal terminals of the display device; and
a display-side auxiliary interface connected to the auxiliary signal terminals of the display device,
the host-side auxiliary interface stores extended display identification data (EDID) and display port configuration data (DPCD) of the display device via communication with an external device, and, when the host-side auxiliary interface is connected to the auxiliary signal terminals of the host device, the host-side auxiliary interface instead of the display device provides the EDID and the DPCD to the host device, and
when the display-side auxiliary interface is connected to the auxiliary signal terminals of the display device, the display-side auxiliary interface instead of the host device reads the EDID and the DPCD from the display device and stores the read-out EDID and DPCD, and controls an operation of the display-side main interface while performing DPCD communication with the display device.

2. The Display-Port optical connector of claim 1, wherein the optical cable connects the host-side main interface to the display-side main interface.

3. The Display-Port optical connector of claim 1 or 2, wherein the host-side auxiliary interface comprises a host-side serial communication interface for communication with an external device, and stores a program input via the host-side serial communication interface and operates according to the stored program.

4. The Display-Port optical connector of claim 3, wherein the host-side auxiliary interface receives transmission-condition information according to the DPCD from the host device, and, when communicating with the external device via the host-side serial communication interface, the host-side auxiliary interface transmits the transmission-condition information to the external device.

5. The Display-Port optical connector of any one of claims 2 to 4, wherein
the auxiliary signal terminals of the host device comprise an auxiliary-plus(+) signal terminal, an auxiliary-minus(-) signal terminal, a power terminal, and a connection signal terminal, and
the host-side auxiliary interface comprises:
a host-side memory;
a host-side decoder configured to perform decoding according to the Manchester II method;
a host-side encoder configured to perform encoding according to the Manchester II method;
a host-side bi-directional converter configured to convert serial differential signals from the auxiliary-plus(+) signal terminal and the auxiliary-minus(-) signal terminal into a parallel input signal according to the Display-Port communication standards, to input the parallel input signal to the host-side decoder, to convert a parallel output signal from the host-side encoder into serial differential signals according to the Display-Port communication standards, and to output the serial differential signals to the auxiliary-plus(+) signal terminal and the auxiliary-minus(-) signal terminal;
a host-side controller comprising a host-side serial communication interface for communication with an external device and configured to store the EDID and the DPCD of the display device in the host-side memory via communication with the external device and to output the EDID and the DPCD to the host-side encoder while receiving the parallel input signal from the host-side decoder; and
a bi-directional switch configured to input a connection signal from the connection signal terminal to the host-side controller and output a connection signal from the host-side controller to the connection signal terminal.

6. The Display-Port optical connector of claim 5, wherein the host-side controller stores a program input via the host-side serial communication interface in the host-side memory and operates according to the stored program.

7. The Display-Port optical connector of claim 5 or 6, wherein the host-side controller receives transmission-condition information of the host device according to the DPCD via the host-side decoder, and, when communicating with the external device via the host-side serial communication interface, the host-side controller transmits the transmission-condition information to the external device.

8. The Display-Port optical connector of any one of claims 2 to 7, wherein the display-side auxiliary interface comprises a display-side serial communication interface for communication with an external device, and stores a program input via the display-side serial communication interface and operates according to the stored program.

9. The Display-Port optical connector of claim 8, wherein the display-side auxiliary interface is configured to:
receive transmission-condition information according to the DPCD when communicating with the external device via the display-side serial communication interface;
set to-be-applied transmission conditions according to the received transmission-condition information;
transmit the to-be-applied transmission conditions to the display device;
control an operation of the display-side main interface according to the to-be-applied transmission conditions; and
change the to-be-applied transmission conditions according to an inappropriateness signal from the display device.

10. The Display-Port optical connector of any one of claims 2 to 9, wherein
the auxiliary signal terminals of the display device comprise an auxiliary-plus(+) signal terminal, an auxiliary-minus(-) signal terminal, a power terminal, and a connection signal terminal, and
the display-side auxiliary interface comprises:
a display-side memory;
a display-side decoder configured to perform decoding according to the Manchester II method;
a display-side encoder configured to perform encoding according to the Manchester II method;
a display-side bi-directional converter configured to convert serial differential signals from the auxiliary-plus(+) signal terminal and the auxiliary-minus(-) signal terminal into a parallel input signal according to the Display-Port communication standards, to input the parallel input signal to the display-side decoder, to convert a parallel output signal from the display-side encoder into serial differential signals according to the Display-Port communication standards, and to output the serial differential signals to the auxiliary-plus(+) signal terminal and the auxiliary-minus(-) signal terminal;
a display-side controller comprising a display-side serial communication interface for communication with an external device and configured to read the EDID and the DPCD according to the parallel input signal received from the display-side decoder, store the read-out EDID and DPCD in the display-side memory, and to control an operation of the display-side main interface while performing DPCD communication with the display device instead of the display device; and
an AND gate configured to input a signal having a logic value "1" to the display-side controller while a power supply voltage from the power terminal and a connection signal from the connection signal terminal are both in a logic "1" state.

11. The Display-Port optical connector of claim 10, wherein the display-side controller stores a program input via the display-side serial communication interface in the display-side memory and operates according to the stored program.

12. The Display-Port optical connector of claim 10 or 11, wherein the display-side controller is configured to:
receive transmission-condition information according to the DPCD when communicating with the external device via the display-side serial communication interface;
set to-be-applied transmission conditions according to the received transmission-condition information;
input the to-be-applied transmission-conditions to the display-side encoder;
control an operation of the display-side main interface according to the to-be-applied transmission conditions; and
change the to-be-applied transmission conditions according to an inappropriateness signal from the display-side decoder.
